# EUROPEAN PATENT APPLICATION

(11) **EP 4 296 242 A1**
(43) Date of publication of application: **27.12.2023**
(21) Application number: 22180518.7
(22) Date of filing: 22.06.2022
(51) Int. Cl.: C02F 1/66, C02F 1/68, C02F 1/00, C02F 1/44

(54) **METHOD FOR RE-MINERALIZATION OF WATER**

(71) Applicant: Bluewater Innovations AB, 114 26 Stockholm (SE)
(72) Inventor: Abdel-Magied, Ahmed F, 11426 Stockholm (SE)
(74) Representative: AWA Sweden AB

(57) **Abstract**

A method for remineralization of water, comprising the following steps providing feed water; providing an aqueous solution comprising hydrochloric acid; adding magnesium carbonate, in an amount of 5-20 g per liter aqueous solution, and calcium sulfate, in an amount of 1-15 g per liter aqueous solution, to the aqueous solution of step b) to prepare an aqueous mixture comprising magnesium carbonate and calcium sulfate; and subsequently combining the water of step a) and at least part of the aqueous mixture of step c) to form a remineralized water feed. An aqueous mixture. Use of an aqueous mixture.

## Description

### Technical field

The present invention relates to a method for re-mineralization of water, an aqueous mixture for remineralization of water and a use of an aqueous mixture for remineralization of water.

### Background

Today, drinking water security is a global concern as hundreds of millions of people still lack daily access to clean and safe drinking water. With the increasing risks associated with climate change, the number of areas where clean water cannot longer be taken for granted increases each day. This has led to that in many locations today people are drinking water that has been treated and recycled from lower quality water or seawater. Furthermore, the sales of bottled mineral water have sky-rocketed around the globe, giving rise to enormous volumes of landfill in the form of plastic waste.

Methods of treating and recycling lower quality water or sea water are known in the art today and include distillation, electrolytic as well as osmotic or reverse osmotic processes. Such methods are very capable of removing salt and impurities such as heavy metals from the water. However, such methods also remove any beneficial elements that might be present in the water. Furthermore, such methods provide soft water with low pH.

While the awareness today with regard to the toxicity levels of elements within the water is relatively high, the beneficial health aspects of certain minerals in water has not been investigated to the same extent.

Although processes for remineralization of water are known in the art, such methods are generally focused on raising the pH and hardness of the treated water to alleviate problems associated with a high reactivity and corrosivity of the soft, high pH water.

Thus, there exists a need in the art today for methods that selectively re-mineralizes water with minerals that are beneficial to the health of the consumer.

### Disclosure of the invention

Thus, it is an object of the present invention to alleviate at least some of the drawbacks associated with the prior art. In particular, there is an object to provide a method for selective remineralization of water such that the water is beneficial to the health of the drinker. Another object is to provide a use of an aqueous mixture for remineralization of water to provide water that is beneficial to the drinker. Other objects will become apparent in the following.

The present invention is based on the realization that water can be remineralized in a manner that is particularly advantageous to the health of a person drinking said water, by combining a feed of water with an aqueous solution of calcium sulfate (CaSO₄) and magnesium carbonate (MgCO₃). By providing calcium sulfate and magnesium carbonate to a water feed, preferably a treated and/or purified water feed, a demineralized water that comprises a composition of minerals that are particularly beneficial to the health of a drinker can be achieved in an effective manner.

According to a first aspect of the present invention, there is provided a method for remineralization of water, comprising the following steps
a) providing feed water;
b) providing an aqueous solution comprising hydrochloric acid;
c) adding magnesium carbonate, in an amount of 5-20 g per liter aqueous solution, and calcium sulfate, in an amount of 1-15 g per liter aqueous solution, to the aqueous solution of step b) to prepare an aqueous mixture comprising magnesium carbonate and calcium sulfate;
d) combining the water of step a) and at least part of the aqueous mixture of step c) to form a remineralized water feed.

Thus, a selectively remineralized water having a health beneficial composition of minerals, as well a suitable pH and hardness, can be achieved. The method can be used to remineralize water that has been treated and/or purified in order to remove salt, minerals and impurities.

As used herein, the term "remineralization" denotes a process for adding selected minerals to water containing no minerals at all, or minerals in an insufficient amount. Preferably, the water to be remineralized has been subjected to a treatment or purification process. In principle, the water used could also not have been subjected to a treatment or purification process but may be natural water which does not contain adequate concentrations of beneficial minerals.

The term "remineralization" as used in the present invention refers to the restoration of minerals in water not containing minerals at all, or in an insufficient amount, in order to obtain a water that is palatable. The remineralization can be achieved by the inventive method.

The magnesium carbonate and calcium sulfate of the present disclosure is typically introduced to the aqueous solution as solids, preferably particulate solids, such as ground solids or precipitated solids. However, dispersion and solutions of said minerals may also be used.

The inventors have found, that by providing adding magnesium carbonate, in an amount of 5-20 g per liter aqueous solution, and calcium sulfate, in an amount of 1-15 g per liter aqueous solution to the aqueous solution comprising hydrochloric acid to form an aqueous mixture, and subsequently combining a portion of the aqueous mixture with a water feed, a remineralized water having a mineral composition with particular health benefits can be found. Such remineralized water may have a concentration of calcium in the range of 10-100 mg/L, a concentration of magnesium in the range of 5-70 mg/L, a hardness in the range of 6-9 °dH, and a pH in the range of 6-10. Such water offers clear health benefits as compared to purified water which comprises only miniscule amounts of beneficial minerals.

By providing the aqueous mixture of step b) with a concentration of magnesium in the range of and a concentration of calcium in the range of, a sufficiently solved mixture can be obtained. Furthermore, the mixture is sufficiently concentrated such that only a small volume is required to remineralize a water feed. This is advantageous in various applications, for example in that a rather small container for containing the mixture before addition to the water feed is sufficient, which is especially advantageous in home appliance applications.

The concentration of dissolved magnesium and calcium in the aqueous mixture as measured by e.g. spectrophotometry typically differs from the calculated concentration based on the mass of the added calcium sulfate and magnesium carbonate and the volume of the liquid in the mixture. This is due to the solubility of the salts which might not allow all of the salt to dissolve in the mixture, and due to that chemical reactions may take place in the vessel where the mixture is formed.

In some examples, the water provided in step a) is a purified water, preferably reverse osmosis (RO) water.

The acid in the aqueous mixture of step c) dissolves the magnesium carbonate and calcium sulfate. At least part of the magnesium carbonate and calcium sulfate is dissolved in the aqueous mixture. Typically, at least 50 %, by weight, of the magnesium carbonate and calcium sulfate is dissolved in the aqueous mixture, such as at least 60%, preferably at least 70 %, more preferably at least 80 %.

The aqueous mixture comprising hydrochloric acid may in some examples substantially consist of concentrated hydrochloric acid. The use of hydrochloric acid is advantageous in that it facilitates the dissolution of at least part of the magnesium carbonate and calcium sulfate introduced in step c. Preferably, the hydrochloric acid is concentrated HCI, such as HCI having a concentration of more than 1M. The step c) may further include agitation to further facilitate the dissolution of at least some of the minerals. Such agitation may for example be performed using a mechanical mixer configured to dissolve minerals in aqueous solutions. The agitation may for example be performed for at least 1 minute, such as at least 10 minutes, preferably of at least 15 minutes.

According to some examples, the calcium sulfate and the magnesium carbonate is introduced to the aqueous solution in sequence. The calcium sulfate and/or the magnesium carbonate may further be added in portions to the aqueous solution. However, simultaneous addition may also be contemplated.

According to one embodiment the mixture is injected directly into a stream of feed water. For example, the mixture can be injected into the feed water stream at a controlled rate by means of a pump communicating with a storage vessel for the solution.

According to another embodiment the mixture is mixed with the feed water in a reaction chamber, e.g., using a mixer such as a mechanical mixer. According to still another embodiment the mixture is injected in a tank receiving the entire flow of feed water.

The solution in step c) may be freshly prepared before being used in step d). In some examples, the time period between the preparation of the solution of step b) and combining the feed water of step a) and the solution of step c) in step d) is less than 2 months, such as less than 1 month.

In some embodiments, the ratio of water: mixture in step d) is in the range of 100-700:1 by volume. In some examples, the water to mixture ratio is in the range of 350-450:1. The step of combining may be performed by adding the aqueous mixture into the water feed by dispensing means, such as a dispensing means comprising a pump. By tuning the amount of aqueous mixture to be added, the mineral composition of the remineralized water may be tuned.

In some further embodiments, the method disclosed herein further comprises the step
e) filtering the remineralized water feed.

It may not be possible to dissolve all of the minerals provided in step c) in the aqueous mixture. Thus, a step of filtering may be utilized in order to remove excess particles from the remineralized water feed. The step of filtering may be performed using for example a membrane filter. The filtering step may be used to remove impurities from the remineralized water feed. Such impurities include, but are not limited to, particles of calcium sulfate and particles of magnesium carbonate.

In some embodiments, the magnesium carbonate added in step c) is added in an amount of 8-16 g per liter aqueous solution, and the calcium sulfate added in step c) is added in an amount of 3-11 g per liter aqueous solution. The above amount has proven to yield an aqueous mixture that is particularly advantageous for remineralizing water. By providing a too low amount of minerals, a large volume of aqueous mixture would have to be used to remineralize the water, which results in that an appliance for performing the inventive method would require a very large container for holding the mixture.

In some embodiments, the remineralized water feed has a hardness in the range of 6-9 °dH. 1 °dH corresponds to 10 mg calcium oxide (CaO) per liter water. However, the hardness is also dependent on the concentration of magnesium present in the water. Purified water generally suffers from being relatively soft, since most of the minerals present therein have been removed during the purification process. A relatively high degree of hardness has been proven beneficial to the health of the drinker. The hardness may be measured using titration or by using spectrophotometry.

In some embodiments, the remineralized water feed has a pH in the range of 6-10, such as from 7-9, preferably from 7-8. Purified water generally suffers from a low pH water. The method of the present disclosure is advantageous in that it provides water with a pH that is suitable for drinking. Additional advantages of a higher pH include lower reactivity of the water, and less corrosivity. Thus, such water can alleviate problems associated with corrosion in pipes used to transport the water.

In some embodiments, the ratio by mass of Ca:Mg in remineralized water feed is in the range if 0.8-4:1, preferably in the range of 1.5-3.5:1. It has surprisingly been found that the mineral balance in the remineralized water can have additional health benefits. In particular, a mineral balance, by mass, between Ca:Mg in the range of 0.8-4:1 has been shown to yield additional health benefits to a drinker. The mineral balance may be measured using titration.

In some examples, the step c) further comprises introducing additional minerals to the aqueous solution. Such minerals may comprise elements, ions and compounds selected from boron, chloride, chromium, cobalt, copper, fluoride, iodine, iron, lithium, manganese, molybdenum, phosphate, rubidium, selenium, silicon, vanadium, and zinc.

In some embodiments, the remineralized water feed has a concentration of Ca in the range 10-100 mg/L, a concentration of Mg in the range of 5-70 mg/L. In particular, the concentration of Ca may be in the range of 20-80 mg/L, the concentration of Mg in the range of 10-50 mg/L. Such concentrations have been shown to provide particular health benefits to the drinker. The concentrations of minerals in the remineralized water feed can be measured using titration. The concentration of minerals in the remineralized water feed can be measured using spectrophotometry.

In some embodiments, the concentration of Cl and SO₄ in the remineralized water are below 250 mg/L, such as below 220 mg/L, preferably below 200 mg/mL. The method disclosed herein is furthermore advantageous in that it provides remineralized water having relatively low amounts of chloride and sulfate ions. Too high amounts of Cl and SO₄ in the remineralized water is less beneficial to the health of the drinker.

In some embodiments, the water feed provided in step a) is a purified water feed purified by reversed osmosis. There exist several methods for purifying water. These include, but are not limited to distillation, electrolytic as well as osmotic or reverse osmotic processes. Reverse osmosis has proven to be particularly efficient for purifying water. However, it is readily understood that the inventive method may be used on any form of feed water, treated or untreated.

The purified water may be sourced from sea water, lake water, desalinated seawater, brackish water or brine, treated wastewater or natural water such as ground water, surface water or rainfall.

In some embodiments, the concentration of hydrochloric acid in the aqueous solution is in the range of 0.75 M-1.5 M, such as in the range of 0.9-1.3 M. Too high concentrations of HCI may cause relatively high amounts of precipitations in the aqueous mixture. Too low concentrations may lead to that a very small amount of Ca and Mg are dissolved in the aqueous mixture.

In a second aspect of the invention, there is provided an aqueous mixture comprising calcium sulfate and magnesium carbonate for remineralization of water, wherein the aqueous mixture has been prepared by providing an aqueous solution comprising hydrochloric acid and adding magnesium carbonate in an amount of 5-20 g per liter aqueous solution and calcium sulfate in an amount of 1-15 g per liter aqueous solution.

In another aspect of the present invention, there is provided a use of an aqueous mixture comprising calcium sulfate and magnesium carbonate for remineralization of water, wherein the aqueous mixture has been prepared by providing an aqueous solution comprising hydrochloric acid and adding magnesium carbonate in an amount of 5-20 g per liter aqueous solution and calcium sulfate in an amount of 1-15 g per liter aqueous solution. The aqueous mixture and the use of an aqueous herein is largely analogous to the step b) disclosed with reference to the first aspect of the inventive concept. Thus, it is readily understood by the skilled person that the advantageous embodiments set out in the first aspect can be applied in the further aspects, unless clearly contradictory.

### Examples

In the following, the invention is further described by way of the nonlimiting examples, in which four different remineralization mixtures were prepared and used to remineralize water.

### Materials and methods

Chemicals used in synthesis below, CaSO₄, and MgCO₃ are of analytical grade and used without any further purification. HCI (aq, 37%) was used.

The remineralized water was analyzed for calcium concentration, magnesium concentration and hardness using a DR6000 spectrophotometer.

### Example 1. Preparation of remineralization mixture

A remineralized solution was prepared in the following manner. 0.5168 g of CaSO₄ and 0.2663 g MgCO₃ were mixed in a 100 mL beaker. 5 mL of HCI (aq) was added into the beaker, under stirring conditions at 750 rpm. After the mixture stopped sizzling, three portions of Reverse Osmosis (RO) water were added with 15 minutes in between each addition, under stirring conditions at 1500 rpm. The first portion was 15 mL RO water, the second portion was 10 mL of RO water, and the third portion was 20 mL. When all three portions were added, the mixture was stirred for 1 hour at 800 rpm to obtain a remineralization mixture M1.

The remineralization mixture M1 was then diluted with RO water to prepare two different remineralized waters, W1.1, W1.2.
*W1.1:* 10.81 mL of the mixture M1 diluted in 489.19 mL of RO water.
*W1.2:* 3.9 mL of the mixture M1 diluted in 496.1 mL of RO water.

### Example 2. Preparation of remineralization mixture

A remineralized solution was prepared in the following manner. 0.7138 g of CaSO₄ and 0.2642 g MgCO₃ were mixed in a 100 mL beaker. 7.5 mL of HCI (aq, 37 %) was added into the beaker, under stirring conditions at 750 rpm. After the mixture stopped sizzling, three portions of Reverse Osmosis (RO) water were added with 15 minutes in between each addition, under stirring conditions at 1500 rpm. The first portion was 12.5 mL RO water, the second portion was 10 mL of RO water, and the third portion was 20 mL. When all three portions were added, the mixture was stirred for 1 hour at 800 rpm to obtain a remineralization mixture M2.

The remineralization mixture M2 was then diluted with RO water to prepare two different remineralized waters, W2.1, W2.2.
*W2.1:* 7.39 mL of the mixture M2 diluted in 492.61 mL of RO water.
*W2.2:* 3.75 mL of the mixture M2 diluted in 496.25 mL of RO water.

### Example 3. Preparation of remineralization mixture

A remineralized solution was prepared in the following manner. 0.7138 g of CaSO₄ and 0.2642 g MgCO₃ were mixed in a 100 mL beaker. 7.5 mL of HCI (aq, 37 %) was added into the beaker, under stirring conditions at 750 rpm. After the mixture stopped sizzling, three portions of Reverse Osmosis (RO) water were added with 15 minutes in between each addition, under stirring conditions at 1500 rpm. The first portion was 12.5 mL RO water, the second portion was 10 mL of RO water, and the third portion was 20 mL. When all three portions were added, the mixture was stirred for 1 hour at 800 rpm to obtain a remineralization mixture M3.

The remineralization mixture M3 was then diluted with RO water to prepare two different remineralized waters, W3.1, W3.2.
*W3.1:* 9.28 mL of the mixture M3 diluted in 490.72 mL of RO water.
*W3.2:* 5.4 mL of the mixture M3 diluted in 494.6 mL of RO water.

### Example 4. Preparation of remineralized remineralization mixture

A remineralized solution was prepared in the following manner. 0.5184 g of CaSO₄ and 0.5238 g MgCO₃ were mixed in a 100 mL beaker. 7.5 mL of HCI (aq) was added into the beaker, under stirring conditions at 750 rpm. After 10 minutes of stirring, an additional 0.5 mL HCL (aq) was added. After the mixture stopped sizzling, three portions of Reverse Osmosis (RO) water were added with 15 minutes in between each addition, under stirring conditions at 1500 rpm. The first portion was 12.5 mL RO water, the second portion was 10 mL of RO water, and the third portion was 20 mL. When all three portions were added, the mixture was stirred for 1 hour at 800 rpm to obtain a remineralization mixture M4.

The remineralization mixture M4 was then diluted with RO water to prepare remineralized water, W4.1.
*W4.1:* 11.56 mL of the concentrate diluted in 488.44 mL of RO water.

### Results

The calcium concentration, magnesium concentration and hardness of the aqueous mixtures M and remineralized waters W were measured using a DR6000 spectrophotometer. The results are shown in the below table 1.

**Table 1. Concentration measurements.**

| **Sample ID** | **Ca (mg/L)** | **Mg (mg/L)** | **Hardness (°dH)** |
|---|---|---|---|
| M1 | 3700 | 1150 | 7.85 |
| W1.1 | 88.0 | 36.3 | 20.7 |
| W1.2 | 36.9 | 10.3 | 7.57 |
| M2 | 4860 | 1170 | 9.51 |
| W2.1 | 80.8 | 20.8 | 16.4 |
| W2.2 | 40.0 | 8.58 | 7.66 |
| M3 | 4310 | 3650 | 12.9 |
| W3.1 | 75.6 | 68.5 | N/A |
| W3.2 | 46.2 | 37.5 | 14.4 |
| M4 | 5720 | 1730 | 11.8 |
| W4.1 | 139 | 31 | 28.9 |

### Conclusions

Thus, the examples above show that the inventive method can be used to produce water having suitable concentrations of Ca, Mg as well as hardness.

## Claims

1. A method for remineralization of water, comprising the following steps
a) providing feed water;
b) providing an aqueous solution comprising hydrochloric acid;
c) adding magnesium carbonate, in an amount of 5-20 g per liter aqueous solution, and calcium sulfate, in an amount of 1-15 g per liter aqueous solution, to the aqueous solution of step b) to prepare an aqueous mixture comprising magnesium carbonate and calcium sulfate;
d) combining the water of step a) and at least part of the aqueous mixture of step c) to form a remineralized water feed.

2. The method according to claim 1 or 2, wherein ratio of water:mixture in step d) is in the range of 200-300:1 by volume.

3. The method according to any one the preceding claims, further comprising the step
e) filtering the remineralized water feed.

4. The method according to any one of the preceding claims, wherein the magnesium carbonate added in step c) is added in an amount of 8-16 g per liter aqueous solution, and the calcium sulfate added in step c) is added in an amount of 3-11 g per liter aqueous solution.

5. The method according to any one of the preceding claims, wherein the remineralized water feed has a hardness in the range of 6-9 °dH.

6. The method according to any one of the claims, wherein the remineralized water feed has a pH in the range of 6-10, such as from 7-9, preferably from 7-8.

7. The method according to any one of the preceding claims, wherein the ratio by mass of Ca:Mg in the remineralized water feed is in the range if 0.8-4:1, preferably in the range of 1.5-3.5:1.

8. The method according to any one of the preceding claims, wherein the remineralized water feed has a concentration of Ca in the range 10-100 mg/L, a concentration of Mg in the range of 5-70 mg/L, and preferably a concentration of HCO₃ of 50-350 mg/L.

9. The method according to claim 10, wherein the remineralized water feed has a concentration of Ca in the range of 20-80 mg/L, a concentration of Mg in the range of 10-50 mg/L, and preferably a concentration of HCO₃ of 100-300 mg/L

10. The method according to any one of the preceding claims, wherein the concentration of Cl and SO₄ in the feed water are below 250 mg/L, such as below 220 mg/L, preferably below 200 mg/mL.

11. The method according to any one of the preceding claims, wherein the water feed of provided in step a) is a deionized water feed deionized by reversed osmosis.

12. The method according to any one of the preceding claims, wherein the concentration of hydrochloric acid in the aqueous solution is in the range of 0.75 M-1.5 M.

13. An aqueous mixture comprising calcium sulfate and magnesium carbonate for remineralization of water, wherein the aqueous mixture has been prepared by providing an aqueous solution comprising hydrochloric acid and adding magnesium carbonate in an amount of 5-20 g per liter aqueous solution and calcium sulfate in an amount of 1-15 g per liter aqueous solution.

14. Use of an aqueous mixture comprising calcium sulfate and magnesium carbonate for remineralization of water, wherein the aqueous mixture has been prepared by providing an aqueous solution comprising hydrochloric acid and adding magnesium carbonate in an amount of 5-20 g per liter aqueous solution and calcium sulfate in an amount of 1-15 g per liter aqueous solution.
